# EUROPEAN PATENT APPLICATION

(11) **EP 4 779 706 A2**
(43) Date of publication of application: **22.07.2026**
(21) Application number: 25218892.5
(22) Date of filing: 27.11.2025
(51) Int. Cl.: H01M 4/134, H01M 4/36, H01M 10/052

(54) **NEGATIVE ELECTRODES AND RECHARGEABLE LITHIUM BATTERIES INCUDING THE SAME**

(30) Priority: 29.11.2024 KR 20240175855
(71) Applicant: SAMSUNG SDI CO., LTD., Yongin-si, Gyeonggi-do 17084 (KR)
(72) Inventor: Lee, Jiho, 17084 Gyeonggi-do (KR); Kim, Ryeongah, 17084 Gyeonggi-do (KR); Lee, Sujin, 17084 Gyeonggi-do (KR)
(74) Representative: Michalski Hüttermann & Partner mbB

(57) **Abstract**

Some example embodiments provide a negative electrode including a negative electrode current collector; a negative electrode active material layer on the negative electrode current collector and including a negative electrode active material; and an edge portion on the negative electrode current collector and provided at an edge of the negative electrode active material layer, wherein the edge portion includes metal particles that form an alloy with lithium.

## Description

### BACKGROUND

### 1. Field

Embodiments of the present disclosure relate to a negative electrode and a rechargeable lithium battery including the same.

### 2. Description of the Related Art

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is actively underway.

Rechargeable lithium batteries include a positive electrode and a negative electrode including an active material capable of intercalating and deintercalating lithium ions, and an electrolyte solution, and generate electrical energy through oxidation and reduction reactions if (e.g., when) lithium ions are intercalated and deintercalated from the positive electrode and the negative electrode.

Because the rechargeable lithium batteries, which are recharged after discharge and may be continuously (e.g., substantially continuously) used, exhibit performance differences depending on its charge/discharge state, efforts to improve the performance of the rechargeable lithium batteries by improving a charge method are being made.

### SUMMARY

Some example embodiments of the present disclosure provide a negative electrode capable of preventing or reducing rupture of a separator by growing lithium dendrites flatly and uniformly (e.g., substantially uniformly).

Some example embodiments provide a rechargeable lithium battery having excellent thermal safety by including the aforementioned negative electrode.

Some example embodiments provide a negative electrode including a negative electrode current collector; a negative electrode active material layer on the negative electrode current collector and including a negative electrode active material; and an edge portion on the negative electrode current collector and provided at an edge of the negative electrode active material layer,
wherein the edge portion includes metal particles that form an alloy with lithium.

Some example embodiments provide a negative electrode current collector; an uncoated region; a first region; a second region; and a third region sequentially provided in a direction parallel (e.g., substantially parallel) to the negative electrode current collector on the negative electrode current collector,
wherein the first region includes metal particles that form an alloy with lithium, the second region includes the metal particles that form the alloy with lithium and a negative electrode active material, and the third region includes the negative electrode active material.

Some example embodiments provide a rechargeable lithium battery including the negative electrode.

The negative electrode according to some example embodiments has a feature that it can prevent or reduce rupture of the separator by allowing lithium dendrites to grow flatly and uniformly (e.g., substantially uniformly), and the rechargeable lithium battery according to some example embodiments has a feature that it has excellent thermal safety because it includes the negative electrode.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cross-sectional view schematically showing a negative electrode according to some example embodiments.
FIG. 2 is a scanning electron microscope (SEM) image showing a shape of lithium dendrites accumulated on a comparative negative electrode active material layer.
FIGS. 3 to 6 are schematic drawings showing rechargeable lithium batteries according to some example embodiments.
FIG. 7 is an SEM image of a portion of a cross-section of an edge portion of the negative electrode of the rechargeable lithium battery cell according to Example 1-1 and FIG. 8 is an SEM image of a portion of a cross-section of an edge portion of the negative electrode of the rechargeable lithium battery cell according to Example 1-2.
FIG. 9 is an SEM image of a portion of a cross-section of an edge portion of the negative electrode of the rechargeable lithium battery cell according to Example 2-1 and FIG. 10 is an SEM image of a portion of a cross-section of an edge portion of the negative electrode of the rechargeable lithium battery cell according to Example 2-2.
FIG. 11 is an SEM image of a portion of a cross-section of an edge portion of the negative electrode of the rechargeable lithium battery cell according to Example 3-1 and FIG. 12 is an SEM image of a portion of a cross-section of an edge portion of the negative electrode of the rechargeable lithium battery cell according to Example 3-2.
FIG. 13 is an SEM image of a portion of an edge section of the negative electrode of the rechargeable lithium battery cell according to Example 4-1 and FIG. 14 is an SEM image of a portion of an edge section of the negative electrode of the rechargeable lithium battery cell according to Example 4-2.
FIG. 15 is an SEM image of a portion of a cross-section of an edge portion of the negative electrode of the rechargeable lithium battery cell according to Example 5.

### DETAILED DESCRIPTION

Hereinafter, embodiments will be described in more detail. However, these embodiments are presented as an example, and the present disclosure is not limited thereto, and the present disclosure is defined by the scope of the claims described below, and equivalents thereof.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

In embodiments, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, and/or the like, are exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, "layer" herein includes not only a shape on the whole surface if (e.g., when) viewed from a plan view, but also a shape on a partial surface.

Unless otherwise specified in this specification, what is indicated in the singular may also include the plural. In embodiments, unless otherwise specified, "A or B" may mean "including A, including B, or including A and B."

As used herein, the term "metal" is interpreted as a concept including ordinary metals, transition metals and metalloids (semi-metals).

As used herein, if (e.g., when) a definition is not otherwise provided, the particle diameter may be an average particle diameter. In embodiments, the particle diameter may refer to an average particle diameter (D₅₀), which means the diameter of particles having a cumulative volume of 50 volume% in the particle size distribution. The average particle diameter (D₅₀) may be measured by any suitable method generally used in the art, for example, by a particle size analyzer, by a transmission electron microscope image, and/or a scanning electron microscope image. In embodiments, a dynamic light-scattering measurement device is used to perform a data analysis, and the number of particles is counted for each particle size range. From this, the average particle diameter (D₅₀) value may be easily obtained through a calculation. In embodiments, it can be measured using a laser diffraction method. If (e.g., when) measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

### Negative Electrode

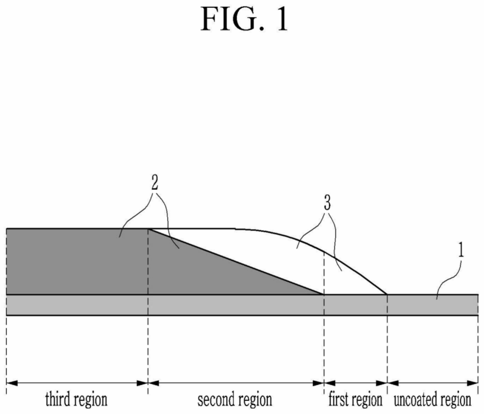

FIG. 1 is a cross-sectional view schematically showing a negative electrode 20 according to some example embodiments.

Referring to FIG. 1, the negative electrode 20 according to some example embodiments includes a negative electrode current collector 1; a negative electrode active material layer 2 on the negative electrode current collector 1 and including a negative electrode active material; and an edge portion 3 on the negative electrode current collector 1 and provided at the edge of the negative electrode active material layer 2. For example, the edge portion 3 may be on the edge of the negative electrode active material layer 2. In embodiments, the edge portion 3 may overlap with the negative electrode active material layer 2, for example, include both a portion that overlaps the negative electrode active material layer 2 and another portion that does not overlap the negative electrode active material layer 2.

For example, the negative electrode 20 may include an uncoated region, a first region, a second region, and a third region sequentially on the negative electrode current collector 1 on the negative electrode current collector 1 in a parallel (e.g., substantially parallel) direction to the negative electrode current collector 1.

The first region may be a region of the edge portion 3 that does not overlap the negative electrode active material layer 2, the second region may be a region of the edge portion 3 that overlaps the negative electrode active material layer 2.

The third region may be a region where the negative electrode active material layer 2 exists, but the edge portion 3 does not exist. For example, the third region may include the negative electrode active material layer 2 and be free or substantially free of the edge portion 3 (e.g., the third region may not include the edge portion 3). The uncoated region may be a region where neither the negative electrode active material layer 2 nor the edge portion 3 exists. For example, the uncoated region may be free or substantially free of the negative electrode active material layer 2 and the edge portion 3 (e.g., the uncoated region may not include the negative electrode active material layer 2 or the edge portion 3).

In a comparative battery assembly having a positive electrode/separator/negative electrode structure, the edge portion of the positive electrode and the edge portion of the negative electrode face each other.

In general, because a composite is less loaded near an edge of the negative electrode active material layer (plate loading-off phenomenon), which leads to inferior specific capacity of the negative electrode to that of the positive electrode facing each other, lithium metal, which is an irreversible product, may accumulate on the negative electrode active material layer.

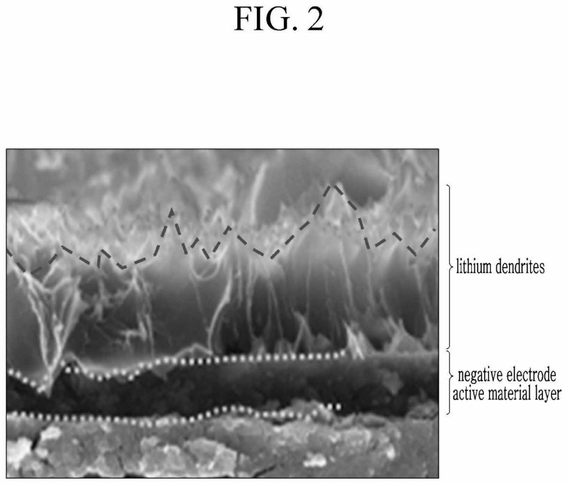

FIG. 2 is a SEM image showing the shape of lithium dendrites accumulated on a comparative negative electrode active material layer. Referring to FIG. 2, the irreversible product may be sharp-shaped lithium dendrites, wherein the lithium dendrites may grow into a sharp and pointed shape, eventually rupturing a separator and causing a short circuit of a battery, resulting in a problem of causing a fire in the battery.

The negative electrode according to some example embodiments, of which the edge portion is coated with metal particles that form an alloy with lithium to control the lithium dendrites to have a flat shape, may prevent (or reduce a likelihood, occurrence, or degree of) the short-circuit of the battery and effectively improve its thermal safety.

For example, the edge portion 3 includes the metal particles that form an alloy with lithium. Hereinafter, the metal particles that form an alloy with lithium may be simply expressed as metal particles.

For example, the first region may include the metal particles that form an alloy with lithium, the second region may include the metal particles that form an alloy with lithium and the negative electrode active material, and the third region may include the negative electrode active material.

For example, the metal particles that form an alloy with lithium may include Ag, Sn, Bi, Zn, Mg, In, Al, or a combination thereof.

For example, the metal particles may serve as nuclei for deposition of lithium metal that accumulates at the negative electrode. The metal particles may serve as a center so that the lithium may be deposited on the surface to form an alloy with the metal particles, wherein the lithium may be deposited in a flat and uniform form (e.g., substantially uniform form).

For example, the lithium dendrites may grow on the negative electrode current collector 1 of the edge portion 3 along a charging direction, if (e.g., when) charging a rechargeable lithium battery. In embodiments, the lithium dendrites may grow in the form of an alloy formed by deposition of lithium metal with the metal particles as a center.

For example, in the edge portion 3, the lithium dendrites may flatly grow from the bottom or the top of the metal particles.

A location where the lithium dendrites grow may suitably vary depending on types (or kinds) of the metal particles, a ratio of the metal particles with lithium to form an alloy, whether or not to include spherical (e.g., generally spherical) graphite, which will be further described herein, a battery-operating temperature, a size of pores present in the edge portion, and/or the like.

For example, the higher ratio of the metal particles with lithium to form an alloy, the higher battery-operating temperature, and/or the smaller size of the pores in the edge portion, the more flatly the lithium dendrites grow from the top of the metal particles.

In both of the cases, the lithium dendrites may flatly grow, effectively improving the thermal safety of the battery.

For example, the metal particles may have a lattice parameter that is the same as or similar to that of the lithium.

The lattice parameter is a parameter that represents a physical size and angle that determines a shape of unit lattices (unit cells) in a crystal structure of particles.

As the metal particles and the lithium have the same or similar lattice parameter, because the unit lattices may have the same or similar sizes, which may be substituted one another and stably mixed, the metal particles and the lithium may easily form an alloy.

The lattice parameter of the metal particles and the lithium may be measured through X-ray diffraction analysis (XRD) by using Cu K-α rays.

In embodiments, the measurement may be performed under suitable conditions generally used in the related art. These measurement conditions may be, for example, an output of 35 kV to 40 kV and 90 mA to 100 mA, 2θ = 10° to 90°, time per step of 25 s to 55 s, and a step size (°/step) of 0.01 to 0.02.

As the metal particles and the lithium have the same or similar lattice parameter, the metal particles may lower a nucleation overpotential during the lithium (Li) deposition and also, lower a diffusion energy barrier of the lithium. Accordingly, as diffusivity of the lithium may be increased, and movement of the lithium may be promoted through lithium (Li) creep, the lithium may be controlled to be uniformly (e.g., substantially uniformly) deposited around the metal particles.

Accordingly, the lithium dendrites produced during the battery operation may be controlled into a flat shape to prevent or reduce rupture of the separator, thereby improving thermal safety of the battery.

Previously, an insulating material such as metal oxide, rather than the metal particles of the present disclosure, has been coated at the edge of the negative electrode, but while the insulating material may form an alloy with the lithium it never plays a role of controlling a shape of the lithium dendrites, and provides no function of preventing or reducing the rupture of the separator.

Based on 100 wt% of the edge portion, the metal particles that form the alloy with the lithium may be included in an amount of ≥ 10 wt% to ≤ 99 wt%, for example, ≥ 10 wt% to ≤ 95 wt%, ≥ 20 wt% to ≤ 95 wt%, or ≥ 25 wt% to ≤ 95 wt%. Within the foregoing numerical ranges, the edge portion may include the metal particles in an optimal amount to control the lithium dendrites to have a flat and uniform shape (e.g., substantially uniform shape).

For example, the edge portion may further include an alloy of the lithium and the metal particles. The alloy of the lithium and the metal particles may be an alloy produced by combining the metal particles with lithium accumulated at the negative electrode during the battery operation as aforementioned.

The alloy of the lithium and the metal particles may be included in an amount of ≥ 10 wt% to ≤ 90 wt%, for example, ≥ 10 wt% to ≤ 85 wt%, ≥ 20 wt% to ≤ 90 wt%, or ≥ 30 wt% to ≤ 90 wt% based on 100 wt% of a total amount of the metal particles and the alloy.

If (e.g., when) the amount of the alloy based on 100 wt% of the total amount of the metal particles and the alloy is as described above, the shape of the lithium dendrite can be controlled to be flat and uniform (e.g., substantially uniform).

For example, the edge portion may further include a binder. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

The dry binder may be a polymer material capable of being fibrous (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The binder may be included in an amount of ≥ 1 wt% to ≤ to ≤ 10 wt%, for example, ≥ 1 wt% to ≤ to ≤ 8 wt%, ≥ 1 wt% to ≤ 5 wt%, or ≥ 1 wt% to ≤ 2.5 wt% based on 100 wt% of the edge portion.

For example, a diameter of the metal particles that form the alloy with lithium may be ≥ 10 nm to ≤ 500 nm, for example ≥ 10 nm to ≤ 400 nm, ≥ 10 nm to ≤ 250 nm, or ≥ 10 nm to ≤ 100 nm. For example, the diameter of the metal particles may be smaller than the diameter of the carbon-based negative electrode active material further described herein. The diameter of the metal particles may be measured as an average particle diameter (D₅₀) using a laser-diffraction particle size analyzer, for example by dispersing the particles in a dispersion medium, introducing the dispersion into a commercially available laser-diffraction device (e.g., Microtrac MT-3000), applying ultrasonic irradiation of about 28 kHz at 60 W, and calculating the D₅₀ value based on 50% of the particle size distribution.

For example, the edge portion may further include spherical (e.g., generally spherical) graphite. The spherical graphite may be crystalline carbon, and the spherical graphite may include spherical (e.g., generally spherical) natural graphite, spherical (e.g., generally spherical) artificial graphite, or a combination thereof. For example, the spherical graphite may be super C65, super P, Vulcan XC-72, or a combination thereof.

If (e.g., when) the spherical graphite is further included, the passage of lithium can be facilitated due to the pores formed between the spherical graphites (e.g., between particles of the spherical graphite), so that the movement speed of lithium can be faster. Accordingly, the possibility of flat lithium dendrites that grow upwards of the spherical graphites increases depending on the charging direction of the negative electrode, which can further enhance the safety of rechargeable lithium batteries.

For example, the spherical graphite may be included in an amount of ≥ 50 wt% to ≤ 80 wt%, for example, ≥ 55 wt% to ≤ 80 wt%, or ≥ 60 wt% to ≤ 75 wt% based on 100 wt% of a total amount of the metal particles that form the alloy with lithium and the spherical graphite. If (e.g., when) the above numerical range is satisfied, lithium dendrites grow flat and uniformly (e.g., substantially uniformly), so that the thermal safety of the rechargeable lithium battery can be very excellent.

For example, the edge portion may be formed on the current collector in the following manner.

First, the edge portion slurry is prepared. The edge portion slurry may be prepared by mixing the metal particles and the binder, or optionally, spherical (e.g., generally spherical) carbon, in an NMP (N-methyl-2-pyrrolidone) solvent or an IPA (isopropyl alcohol) solvent.

For example, the negative electrode active material slurry may be first coated on the current collector, and then the edge portion slurry may be coated on the edge of the negative electrode active material slurry, and the negative electrode active material slurry and the edge portion slurry may be dried and compressed together to form the edge portion.

As another example, a negative electrode active material slurry may be first coated, dried, and compressed on a current collector to form a layer of a negative electrode active material, and then an edge portion slurry may be separately coated, dried, and compressed on an edge of the current collector to form an edge portion.

The negative electrode active material layer includes a negative electrode active material and may further include a binder and/or a conductive material (e.g., an electrically conductive material).

The negative electrode active material may include a material that is capable of reversibly intercalating/deintercalating lithium ions, a lithium metal, a lithium metal alloy, a material capable of doping/dedoping lithium, and/or a transition metal oxide.

For example, the negative electrode active material may include a carbon-based negative electrode active material that is capable of reversibly intercalating/deintercalating lithium ions.

For example, the carbon-based negative electrode active material may include crystalline carbon, amorphous carbon, or a combination thereof. The crystalline carbon may be graphite such as non-shaped, sheet-shaped, flake-shaped, sphere-shaped, and/or fiber-shaped natural graphite and/or artificial graphite, and the amorphous carbon may be a soft carbon, a hard carbon, a mesophase pitch carbonization product, calcined coke, and/or the like.

For example, the diameter of the carbon-based negative electrode active material may be ≥ 0.1 µm to ≤ 35 µm, for example ≥ 0.1 µm to ≤ 20 µm, ≥ 0.1 µm to ≤ 10 µm, ≥ 0.1 µm to ≤ 5 µm, or ≥ 0.1 µm to ≤ 2.5 µm. The diameter of the carbon-based negative electrode active material may be measured as an average particle diameter (D₅₀) using a laser-diffraction particle size analyzer, for example by dispersing the particles in a dispersion medium, introducing the dispersion into a commercially available laser-diffraction device (e.g., Microtrac MT-3000), applying ultrasonic irradiation of about 28 kHz at 60 W, and calculating the D₅₀ value based on 50% of the particle size distribution.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may be a Si-based negative electrode active material and/or a Sn-based negative electrode active material. The Si-based negative electrode active material may be silicon, a silicon-carbon composite, SiOx (0 < x ≤ 2), a Si-Q alloy (wherein Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some example embodiments, the silicon-carbon composite may be in a form of silicon particles and amorphous carbon coated on the surface of the silicon particles. For example, the silicon-carbon composite may include a secondary particle (core) assembled with silicon primary particles and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

For example, the negative electrode active material layer may include ≥ 90 to ≤ 99 wt% of the negative electrode active material, ≥ 0.5 to ≤ 5 wt% of the binder, and ≥ 0 to ≤ 5 wt% of the conductive material.

The binder serves to well attach the negative electrode active material particles to each other and also to well attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material capable of being fibrous (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminum silver, and the like; a conductive polymer (e.g., an electrically conductive polymer) such as a polyphenylene derivative; or a mixture thereof.

The negative electrode current collector may be selected from copper foil, nickel foil, stainless steel foil, titanium foil, nickel foam, copper foam, a polymer substrate coated with a conductive metal (e.g., an electrically conductive metal), and a combination thereof.

### Rechargeable Lithium Battery

In some example embodiments, a rechargeable lithium battery includes the aforementioned negative electrode; a positive electrode; and a separator between the positive electrode and the negative electrode. The rechargeable lithium battery including the negative electrode can have excellent thermal safety of the battery because lithium dendrites grow evenly in a flat shape if (e.g., when) the battery is operated.

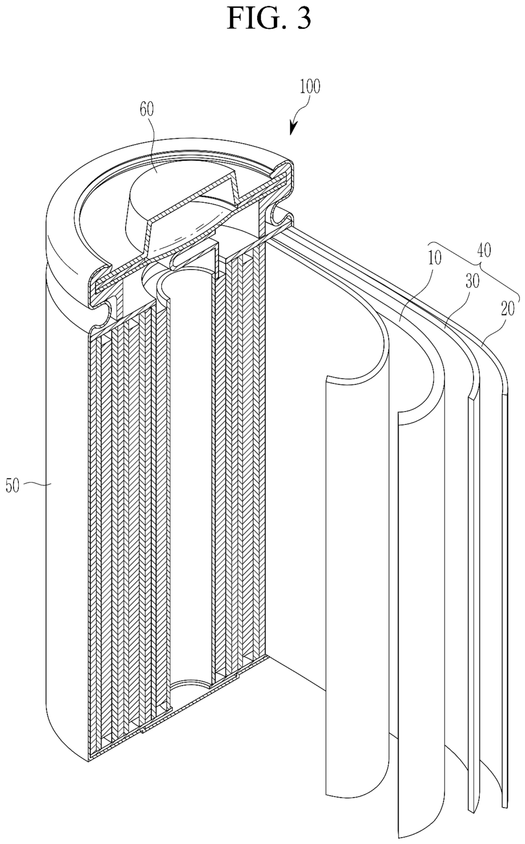

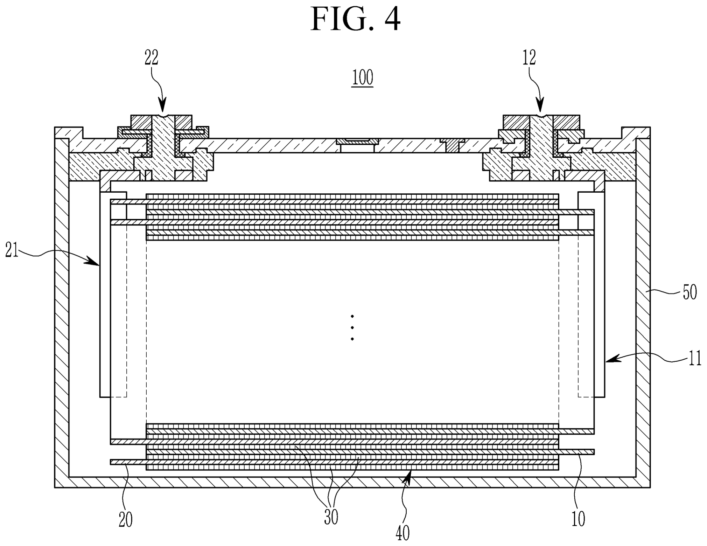

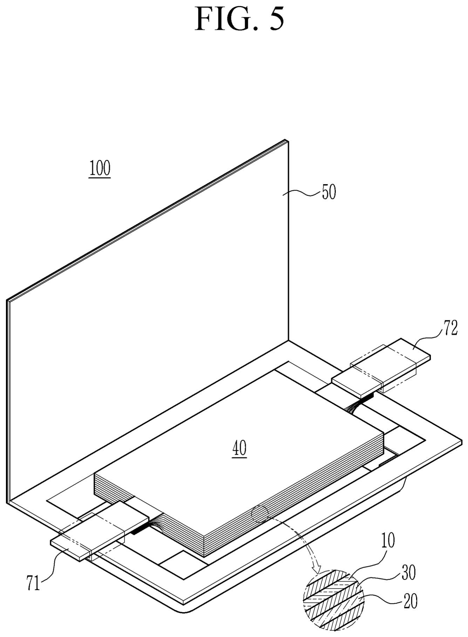

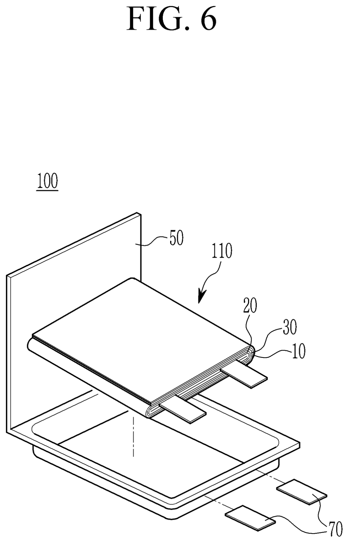

The rechargeable lithium battery may be classified into cylindrical, prismatic, pouch, coin, and/or the like depending on its shape. FIGS. 3 to 6 are schematic views illustrating rechargeable lithium batteries according to some example embodiments. FIG. 3 shows a cylindrical battery, FIG. 4 shows a prismatic battery, and FIGS. 5 and 6 show pouch-type batteries.

Referring to FIGS. 3 to 6, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution.

The rechargeable lithium battery 100 may include a sealing member 60 that seals the case 50 as shown in FIG. 3. In FIG. 4, the rechargeable lithium battery 100 may include a positive electrode lead tab 11, a positive electrode terminal 12, a negative electrode lead tab 21, and a negative electrode terminal 22. As shown in FIGS. 5 and 6, the rechargeable lithium battery 100 includes an electrode tab 70 (FIG. 6), for example, a positive electrode tab 71 and a negative electrode tab 72 (FIG. 5) that serve as an electrical path to induce the current formed in the electrode assembly 40 to the outside.

A rechargeable lithium battery according to some example embodiments may be applied to automobiles, mobile phones, and/or various suitable types (or kinds) of electrical devices, but the present disclosure is not limited thereto.

Hereinafter, the components that constitutes a rechargeable lithium battery other than the aforementioned negative electrode are described in more detail.

### Positive Electrode

The positive electrode for a rechargeable lithium battery may include a current collector and a positive electrode active material layer on the current collector. The positive electrode active material layer includes a positive electrode active material and may further include a binder and/or conductive material (e.g., electrically conductive material).

For example, the positive electrode may further include an additive that can act as a sacrificial positive electrode.

As the positive electrode active material, a compound capable of intercalating and deintercalating lithium (lithiated intercalation compound) may be used. For example, at least one compound oxide of lithium and a metal selected from cobalt, manganese, nickel, and a combination thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, a compound represented by any one selected from the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high nickel-based positive electrode active material in which the nickel content is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in a lithium transition metal composite oxide. The high-nickel positive electrode active material may achieve high capacity and may be applied to highcapacity, high-density rechargeable lithium batteries.

An amount of the positive electrode active material may be ≥ 90 wt% to ≤ 99.5 wt% based on 100 wt% of the positive electrode active material layer, and each amount of the binder and conductive material may be ≥ 0.5 wt% to ≤ 5 wt%, respectively, based on 100 wt% of the positive electrode active material layer.

The binder serves to well attach the positive electrode active material particles to each other and also to well attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is used to impart conductivity (e.g., electrical conductivity) to the electrode, and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, and/or the like, in a form of a metal powder and/or a metal fiber; a conductive polymer (e.g., an electrically conductive polymer) such as a polyphenylene derivative; or a mixture thereof.

The current collector may include Al, but is not limited thereto.

### Electrolyte Solution

The electrolyte solution for a rechargeable lithium battery includes a non-aqueous organic solvent and a lithium salt.

The non-aqueous organic solvent serves as a medium to transmit ions that take part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (or kinds).

In embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. For example, the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

Examples and comparative examples of the present disclosure are described below. However, the following examples are only examples of the present disclosure, and the present disclosure is not limited to the following examples.

### (Examples)

### Example 1-1

97.5 wt% of artificial graphite (a diameter: 1 µm), 1.0 wt% of carboxylmethyl cellulose, and 1.5 wt% of styrene butadiene rubber (SBR) were mixed in a water solvent to prepare a negative electrode active material slurry. The negative electrode active material slurry was coated on a copper current collector and then, dried and compressed to form a negative electrode active material layer.

Subsequently, 90 wt% of Ag particles (having a diameter: 50 nm) and 10 wt% of a polyvinylidene fluoride binder were mixed in an NMP (N-methyl-2-pyrrolidone) solvent to prepare a slurry for an edge portion. The edge portion slurry was applied to an edge of the negative electrode active material layer formed on the copper current collector and then, dried and compressed to form an edge portion.

Subsequently, 96 wt% of LiCoO₂, 2 wt% of Ketjen black, and 2 wt% of polyvinylidene fluoride were mixed in an N-methyl-2-pyrrolidone solvent to prepare a positive electrode active material slurry. The positive electrode active material slurry was coated on an Al current collector and then, dried and compressed to manufacture a positive electrode.

The positive electrode and the negative electrode were used with a polyethylene separator and an electrolyte prepared by dissolving 1.15 M LiPF₆ in a mixed solvent of EC (ethylenecarbonate): EMC (ethylmethylcarbonate): DMC (dimethylcarbonate) (= 3:3:4 in a volume ratio) to manufacture a rechargeable lithium battery cell according to Example 1.

### Example 1-2

A rechargeable lithium battery cell was manufactured in substantially the same manner as in Example 1-1 except that the slurry for an edge portion was prepared by mixing 25 wt% of Ag particles (having a diameter: 50 nm), 10 wt% of a polyvinylidene fluoride binder, and 65 wt% of spherical graphite (super C65) in an NMP solvent.

### Example 2-1

A rechargeable lithium battery cell of Example 2-1 was manufactured in substantially the same manner as in Example 1-1 except that Sn particles (having a diameter: 100 nm) were used instead of the Ag particles in the edge portion.

### Example 2-2

A rechargeable lithium battery cell of Example 2-2 was manufactured in substantially the same manner as in Example 1-2 except that Sn particles (having a diameter: 100 nm) were used instead of the Ag particles in the edge portion.

### Example 3-1

A rechargeable lithium battery cell of Example 3-1 was manufactured in substantially the same manner as in Example 1-1 except that Bi particles (having a diameter: 100 nm) were used instead of the Ag particles in the edge portion.

### Example 3-2

A rechargeable lithium battery cell of Example 3-2 was manufactured in substantially the same manner as in Example 1-2 except that Bi particles (having a diameter: 100 nm) were used instead of the Ag particles in the edge portion.

### Example 4-1

A rechargeable lithium battery cell of Example 4-1 was manufactured in substantially the same manner as in Example 1-1 except Zn particles (having a diameter: 100 nm) were used instead of the Ag particles in the edge portion.

### Example 4-2

A rechargeable lithium battery cell of Example 4-2 was manufactured in substantially the same manner as in Example 1-2 except the Zn particles (having a diameter: 100 nm) were used instead of the Ag particles in the edge portion.

### Example 5

A rechargeable lithium battery cell of Example 5 was manufactured in substantially the same manner as in Example 1-1 except the Mg particles (having a diameter: 100 nm) were used instead of the Ag particles in the edge portion.

### Evaluation Examples

### Evaluation Example 1: Evaluation of Lithium Dendrite Shape

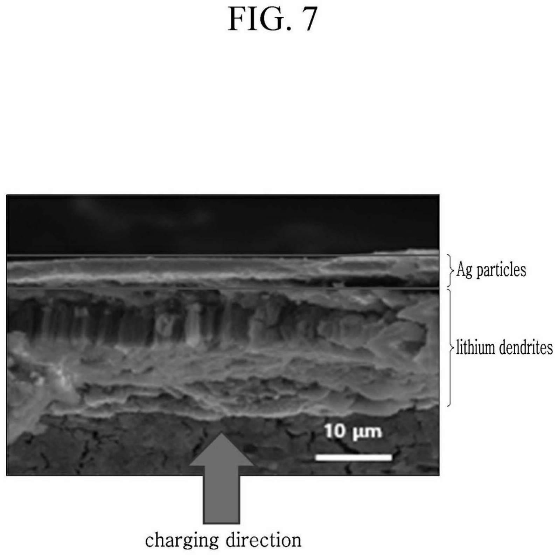

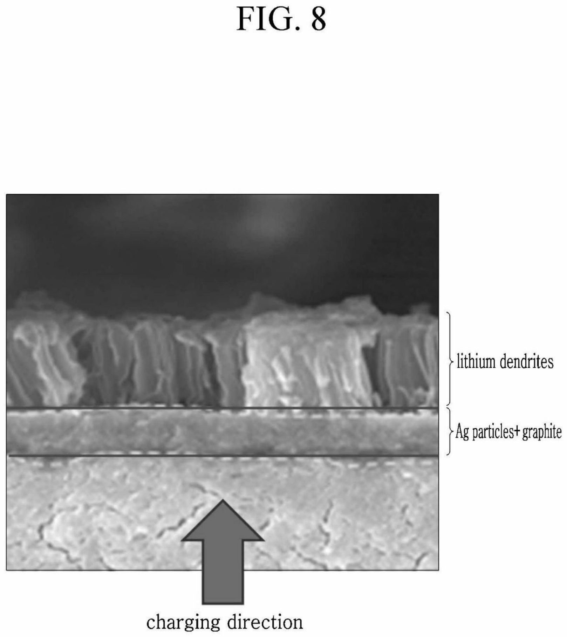

FIG. 7 is an SEM image of a portion of a cross-section of the edge portion of the negative electrode of the rechargeable lithium battery cell according to Example 1-1, and FIG. 8 is an SEM image of a portion of a cross-section of the edge portion of the negative electrode of the rechargeable lithium battery cell according to Example 1-2.

Referring to FIG. 7, it can be seen that flat-shaped lithium dendrites grew downward from the Ag particles along the charging direction, and referring to FIG. 8, it can be seen that flat-shaped lithium dendrites grew upward from the Ag particles and the spherical graphite along the charging direction.

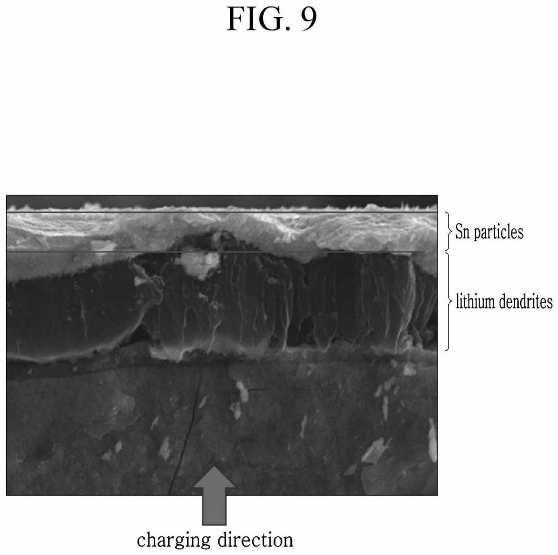

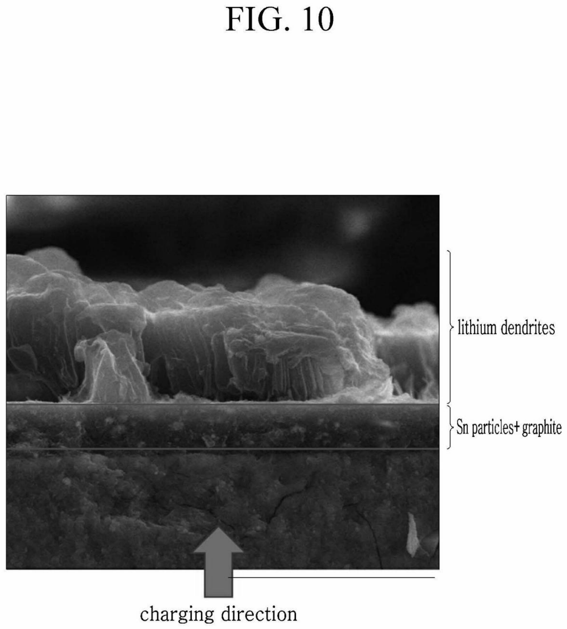

FIG. 9 is an SEM image of a portion of a cross-section of the edge portion of the negative electrode of the rechargeable lithium battery cell according to Example 2-1, and FIG. 10 is an SEM image of a portion of a cross-section of the edge portion of the negative electrode of the rechargeable lithium battery cell according to Example 2-2.

Referring to FIG. 9, it can be seen that flat-shaped lithium dendrites grew downward from the Sn particles along the charging direction, and referring to FIG. 10, it can be seen that flat-shaped lithium dendrites grew upward from the Sn particles and the spherical graphite along the charging direction.

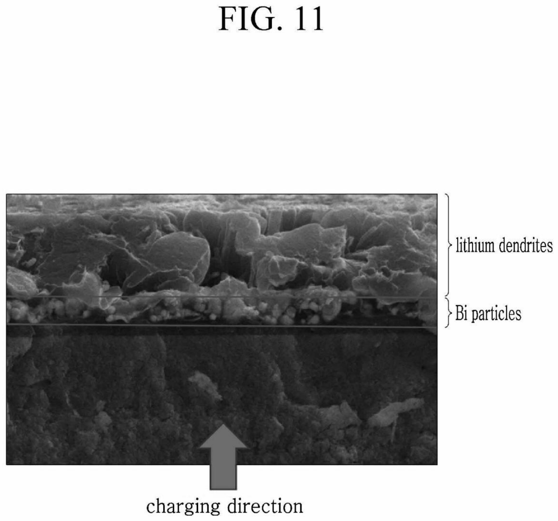

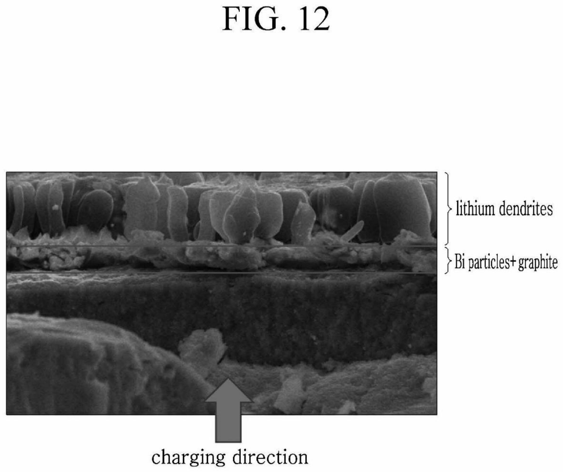

FIG. 11 is an SEM image of a portion of a cross-section of the edge portion of the negative electrode of the rechargeable lithium battery cell according to Example 3-1, and FIG. 12 is an SEM image of a portion of a cross-section of the edge portion of the negative electrode of the rechargeable lithium battery cell according to Example 3-2.

Referring to FIG. 11, it can be seen that flat-shaped lithium dendrites grew upward from the Bi particles along the charging direction, and referring to FIG. 12, it can be seen that flat-shaped lithium dendrites grew upward from the Bi particles and the spherical graphite along the charging direction.

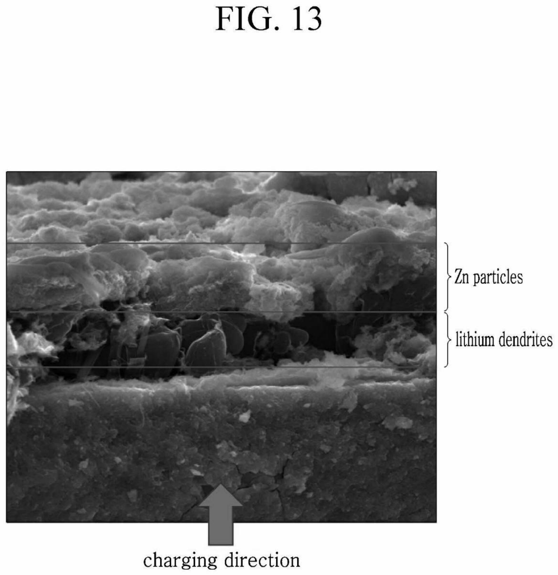

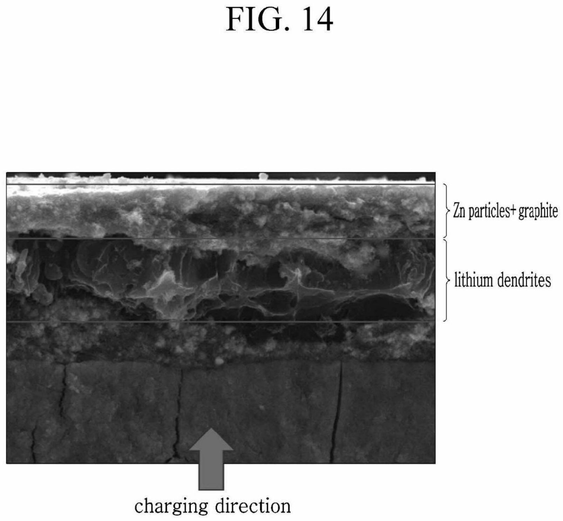

FIG. 13 is an SEM image of a portion of the edge section of the negative electrode of the rechargeable lithium battery cell according to Example 4-1, and FIG. 14 is an SEM image of a portion of the edge section of the negative electrode of the rechargeable lithium battery cell according to Example 4-2.

Referring to FIG. 13, it can be seen that flat-shaped lithium dendrites grew downward from the Zn particles along the charging direction, and referring to FIG. 14, it can be seen that flat-shaped lithium dendrites grew downward from the Zn particles and the spherical graphite.

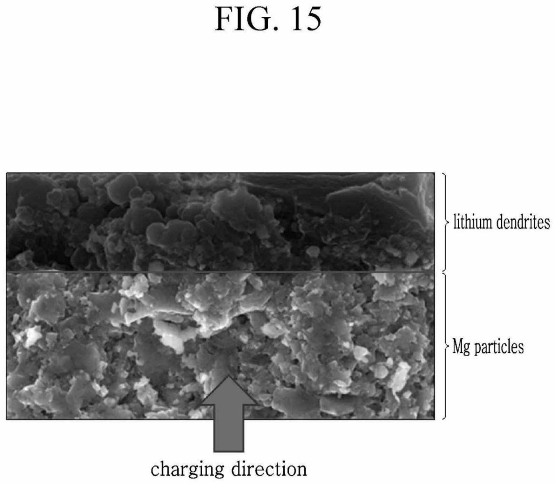

FIG. 15 is an SEM image of a portion of a cross-section of the edge portion of the negative electrode of the rechargeable lithium battery cell according to Example 5. Referring to FIG. 15, it can be seen that flat-shaped lithium dendrites grew upward from the Mg particles along the charging direction.

In conclusion, Examples 1-1, 1-2, 2-1, 2-2, 3-1, 3-2, 4-1, 4-2, and 5 exhibited that as lithium metal and metal particles formed an alloy, flat-shaped lithium dendrites uniformly grew, effectively preventing rupture of the separators.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the spirit and scope of the appended claims. Description of Symbols

| | | | |
|---|---|---|---|
| 20: | negative electrode | | |
| 1: | negative electrode current collector | | |
| 2: | negative electrode active material layer | 3: | edge portion |
| 100: | rechargeable lithium battery | 10: | positive electrode |
| 11: | positive electrode lead tab | | |
| 12: | positive electrode terminal | | |
| 21: | negative electrode lead tab | | |
| 22: | negative electrode terminal | | |
| 30: | separator | 40: | electrode assembly |
| 50: | case | 60: | sealing member |
| 70: | electrode tab | 71: | positive electrode tab |
| 72: | negative electrode tab | | |

## Claims

1. A negative electrode (20), comprising:
a negative electrode current collector (1);
a negative electrode active material layer (2) on the negative electrode current collector (1) and comprising a negative electrode active material; and
an edge portion (3) on the negative electrode current collector (1) and provided at an edge of the negative electrode active material layer (2),
wherein the edge portion (3) comprises metal particles that form an alloy with lithium; or
a negative electrode current collector (1);
an uncoated region; a first region; a second region; and a third region sequentially provided in a direction parallel to the negative electrode current collector (1) on the negative electrode current collector (1),
wherein the first region comprises metal particles that form an alloy with lithium,
the second region comprises the metal particles that form the alloy with lithium and a negative electrode active material, and
the third region comprises the negative electrode active material.

2. The negative electrode (20) as claimed in claim 1, wherein:
the metal particles that form the alloy with lithium comprise Ag, Sn, Bi, Zn, Mg, In, Al, or a combination thereof.

3. The negative electrode (20) as claimed in claim 1 or 2, wherein:
the metal particles have a lattice parameter that is the same as or similar to that of the lithium.

4. The negative electrode (20) as claimed in any one of claims 1 to 3, wherein:
the metal particles that form the alloy with lithium is included in an amount of ≥ 10 wt% to ≤ 99 wt% based on 100 wt% of the edge portion (3).

5. The negative electrode (20) as claimed in any one of claims 1 to 4, wherein:
the edge portion (3) comprises an alloy of the lithium and the metal particles.

6. The negative electrode (20) as claimed in any one of claims 1 to 5, wherein:
the alloy of the lithium and the metal particles is included in an amount of ≥ 10 wt% to ≤ 90 wt% based on 100 wt% of a total amount of the metal particles and the alloy.

7. The negative electrode (20) as claimed in any one of claims 1 to 6, wherein:
a diameter of the metal particles forming the alloy with lithium is ≥ 10 nm to ≤ 500 nm.

8. The negative electrode (20) as claimed in any one of claims 1 to 7, wherein:
the edge portion (3) further comprises spherical graphite.

9. The negative electrode (20) as claimed in claim 8, wherein:
the spherical graphite is included in an amount of ≥ 50 wt% to ≤ 80 wt% based on 100 wt% of a total amount of the metal particles and the spherical graphite.

10. The negative electrode (20) as claimed in any one of claims 1 to 9, wherein:
the negative electrode active material comprises a carbon-based negative electrode active material.

11. The negative electrode (20) as claimed in claim 10, wherein:
a diameter of the carbon-based negative electrode active material is ≥ 0.1 µm to ≤ 35 µm.

12. The negative electrode (20) as claimed in any one of claims 1 to 11, wherein:
the edge portion (3) further comprises a binder, and
the binder comprises a non-aqueous binder, an aqueous binder, a dry binder, or a combination thereof.

13. The negative electrode (20) as claimed in any one of claims 1 to 12, wherein the uncoated region does not include the negative electrode active material.

14. A rechargeable lithium battery (100), comprising:
the negative electrode (20) as claimed in any one of claims 1 to 13;
a positive electrode (10) comprising a positive electrode active material; and
a separator (30) between the positive electrode (10) and the negative electrode (20).
